# EUROPÄISCHE PATENTSCHRIFT

(11) **EP 2 138 279 B1**
(45) Veröffentlichungstag und Bekanntmachung des Hinweises auf die Patenterteilung: **16.03.2011**
(21) Anmeldenummer: 09007740.5
(22) Anmeldetag: 12.06.2009
(51) Int. Cl.: B25F 5/00, B24B 55/00, F16D 55/02

(54) **Elektrohandwerkzeuggerät mit Bremseinrichtung**
Electric hand tool device with braking mechanism
Machine-outil électrique manuelle dotée d'un dispositif de freinage

(30) Priorität: 24.06.2008 DE 102008030632
(43) Veröffentlichungstag der Anmeldung: 30.12.2009
(73) Patentinhaber: Metabowerke GmbH, 72622 Nürtingen (DE)
(72) Erfinder: Küther, Ludwig, 71111 Waldenbuch (DE); Stenzel, Thomas, 73760 Ostfildern (DE)
(74) Vertreter: Raunecker, Klaus Peter

(56) Entgegenhaltungen:
- DD-A1- 204 974
- DE-A1- 3 722 629
- DE-A1- 3 741 536
- US-A- 5 474 161

## Beschreibung

Die Erfindung betrifft ein Elektrohandwerkzeuggerät, insbesondere Winkelschleifer oder Trennschleifer, mit einem Getriebegehäuseteil, einem Motorgehäuseteil und einem Handgriffteil, wobei zumindest der Getriebegehäuseteil und der Motorgehäuseteil voneinander separate zusammengefügte Komponenten sein können, und mit einer Bremseinrichtung zum Abbremsen der Antriebswelle nach Abschalten des Geräts, wobei die Bremseinrichtung insbesondere durch eine mechanische Kopplung mit einem manuell betätigbaren Stellmittel des Geräts gelöst bzw. wieder aktiviert wird, und wobei die Bremseinrichtung eine erste mit der Antriebswelle drehfeste Bremsscheibe und eine nicht drehende Gegenbremsscheibe umfasst, die in Richtung auf die Bremsscheibe federvorgespannt ist.

Ein derartiges Elektrohandwerkzeuggerät ist beispielsweise bekannt aus DE 37 41 536 A1.

Bei Bremseinrichtungen von Elektrohandwerkzeuggeräten der hier in Rede stehenden Art, bei denen die Antriebswelle mit hohen Drehzahlen von < 25000 und insbesondere < 30000 U/min angetrieben wird, kann sich zwischen der Bremsscheibe und der einen verschleißbaren Bremsbelag aufweisenden Gegenbremsscheibe ein Luftpolster aufbauen. Um die Bremswirkung nicht zu beeinträchtigen, sollte diese Luft beim Bremsen verdrängt werden können. Dieses Problem stellt sich, weil Bremsscheibe und Gegenbremsscheibe sich beim Bremsen über ihre gesamte flächenhafte Erstreckung überdecken und weil die Umdrehungsgeschwindigkeiten bei der Antriebswelle von Elektrohandwerkzeuggeräten so hoch sind. Die Anbringung von Durchgangsöffnungen in der Bremsscheibe wäre zwar grundsätzlich denkbar; sie würde aber bei der Herstellung der Bremsscheiben als Drehteil einen zusätzlichen Arbeitsgang erfordern und außerdem in entsprechender Anzahl eine Schwächung der Bremsscheibe bedeuten.

US-A-5,474,161 und DD-A-204 974 zeigen Bremsscheiben von Kraftfahrzeugbremsanlagen, bei denen spiralförmige Rillen ausgebildet sind.

Der vorliegenden Erfindung liegt die Aufgabe zugrunde, mit der Bildung von Luftpolstern bei der Bremseinrichtung einhergehende Probleme zu lösen.

Diese Ausgabe wird durch ein Elektrohandwerkzeuggerät mit den Merkmalen des Anspruchs 1 gelöst.

Somit kann während des Abbremsens bzw. Stillsetzens der Antriebswelle infolge der hohen Antriebsdrehzahl eingesogene Luft über die nach außen strebenden nutförmigen Vertiefungen nasch verdrängt werden, so dass die Bremsung bzw. Stillsetzung der Antriebswelle bzw. des gesamten Antriebsstrangs des Elektrohandwerkzeuggeräts nicht durch Luftpolsterbildung in der Bremseinrichtung behindert wird.

Die nutförmigen Vertiefungen verlaufen bezuglich der Antriebswelle spiralförmig nach außen was die Herstellung der Bremsscheibe durch eine spanabhebend drehende Bearbeitung wesentlich vereinfacht.

In weiterbildung des Erfindungsgedankens erweist es sich als vorteilhaft, wenn die Steigung des spiralförmigen Verlaufs der Vertiefungen 3 - 8 mm, insbesondere 4-6 mm beträgt.

Es erweist es sich als vorteilhaft, dass die nutförmigen Vertiefungen bis ganz zum Rand der Bremsscheibe verlaufen und dort ausmünden, so dass Luft solchenfalls fliehkraftunterstützt nach (radiale außen verdrängt werden kann.

Die genannten nutförmigen Vertiefungen, haben eine bevorzugte Tiefe von 0,2 - 0,6 mm und weiter insbesondere von 0,3 - 0,5 mm. Sie haben eine bevorzugte Breite von 0,5 -1,5 mm, insbesondere von 0,5 - 1,2 mm und weiter insbesondere von 0,6 - 1, 0 mm.

Um das Elektcohandwerkzeuggerät weiter dahingehend zu verbessern, dass die Bremseinrichtung schmal bauend, kostengünstig und mechanisch verhältnismäßig einfach realisierbar ist, wird vorgeschlagen, dass die Gegenbremsscheibe von einem flächenhaften im wesentlichen in einer Ebene parallel zur Ebene der Gegenbremsscheibe erstreckten Betätigungsorgan entgegen der Federvorspannung in Freigaberichtung bewegbar ist und das flächenhafte Betätigungsorgan hierfür bezüglich der genannten Ebene um einige Grad verkippbar ist.

Es hat sich konstruktiv als zweckmäßig erwiesen, die Bremsscheibe drehfest fixiert auf der Antriebswelle anzuordnen und nur die Gegenbremsscheibe als Stellelement der Bremseinrichtung auszubilden. Eine extrem schmal bauende Bremseinrichtung kann dann erfindungsgemäß dadurch erzielt werden, dass das vorstehend genannte flächenhafte Betätigungsorgan lediglich durch geringfügiges Verkippen bezüglich seiner Ebene die Gegenbremsscheibe in Freigaberichtung oder in Feststellrichtung bewegt. Die genannte Ebene, welche das Betätigungsorgan in der aktivierten Stellung der Bremseinrichtung einnimmt, also wenn das Elektrohandwerkzeuggerät nicht eingeschaltet ist, verläuft dann im Wesentlichen senkrecht zur Längsrichtung der Antriebswelle und parallel zu der Bremsscheibe beziehungsweise Gegenbremsscheibe. Die Konstruktion ist derart, dass die Gegenbremsscheibe durch geringfügiges Verkippen des flächenhaften Betätigungsorgans parallel in Längsrichtung der Antriebswelle geringfügig ausgelenkt wird, ohne selbst zu verkippen, so dass die miteinander zusammenwirkenden Bremsflächen von Bremsscheibe und Gegenbremsscheibe außer Eingriff gelangen. Insgesamt lässt sich dies konstruktiv einfach verwirklichen.

In Weiterbildung der Erfindung erweist es sich als vorteilhaft, wenn die Gegenbremsscheibe quasi schwimmend um die Antriebswelle herum gelagert ist. Solchenfalls kann die Gegenbremsscheibe mit einer gegenüber dem Durchmesser der Antriebswelle größeren Durchgangsöffnung vorgesehen sein. Sie wird durch die sie vorspannende Feder vorzugsweise schwimmend lageorientiert.

In Weiterbildung dieses Erfindungsgedankens erweist es sich als vorteilhaft, dass die Gegenbremsscheibe einen inneren Kragen oder Bund aufweist, welcher koaxial zu der Antriebswelle verläuft und eine Öffnung definiert, durch die sich die Antriebswelle hindurcherstreckt.

Wenn sich der genannte innere Kragen oder Bund in Weiterbildung des vorstehenden Erfindungsgedankens mit seinem freien Ende zu dem Betätigungsorgan hin erstreckt, so erweist es sich als vorteilhaft, wenn die Feder den Kragen oder Bund radial außen konzentrisch umgibt. Diesbezüglich ist es vorteilhaft, wenn zwischen der Feder und dem Kragen oder Bund ein geringes Spiel von vorzugsweise kleiner 1,5 mm vorgesehen ist, wodurch eine schwimmende Lagerung der Gegenbremsscheibe stabilisiert werden kann. Die Feder kann aber auch den inneren Kragen oder Bund des Betätigungsorgans spielfrei umgeben und insbesondere das Betätigungsorgan klemmend oder formschlüssig halten. Solchenfalls wäre die schwimmende Lagerung durch die Querelastizität der Feder selbst erreicht.

Die Gegenbremsscheibe kann in vorteilhafter Weise eine ringscheibenförmige Blechscheibe mit einer Bremsbelagbeschichtung umfassen.

Auch das flächenhafte Betätigungsorgan ist vorteilhafterweise ringscheibenförmig ausgebildet, so dass es um die Antriebswelle herum anordenbar ist.

In Weiterbildung der Erfindung erweist es sich als vorteilhaft, wenn das flächenhafte Betätigungsorgan radiale oder axiale Ansätze aufweist, die insbesondere einstückig mit dem Betätigungsorgan ausgebildet sein können. Solchenfalls kann das Betätigungsorgan beispielsweise als Biegestanzteil hergestellt werden.

Die Stellverbindung zwischen dem Betätigungsorgan und der Gegenbremsscheibe kann grundsätzlich auf verschiedene Weise realisiert werden. Nach einer Ausführungsform der Erfindung ist dies so verwirklicht, dass wenigstens einer, vorzugsweise zwei der Ansätze des flächenhaften Betätigungsorgans aus der Ringscheibenebene heraus gebogen sind und die Gegenbremsscheibe in axialer Richtung der Antriebswelle hintergreifen. Auf diese Weise wäre eine unmittelbare Kopplung zwischen flächenhaftem Betätigungsorgan und Gegenbremsscheibe erreicht. Der genannte wenigstens eine Ansatz kann hierfür beispielsweise wenigstens zweimal abgewinkelt sein.

Die kippbare Lagerung des flächenhaften Betätigungsorgans kann ebenfalls in verschiedener Weise realisiert sein. Beispielsweise könnte das Betätigungsorgan in einer Gehäusenut kippbar vorgesehen sein. Nach einer bevorzugten Ausführungsform des erfindungsgemäßen Elektrohandwerkzeuggeräts ist das flächenhafte Betätigungsorgan über wenigstens einen, vorzugsweise über zwei Ansätze gegen eine Gehäusekomponente des Handwerkzeuggeräts schwenkbar gelagert, um die Kippbewegung ausführen zu können. Die genannten Ansätze können wiederum einstückig mit dem flächenhaften Betätigungsorgan ausgebildet sein. Sie können vorzugsweise in der Ebene des Betätigungsorgans erstreckt sein. Es hat sich gezeigt, dass auf diese Weise lediglich eine insbesondere schlitzförmige Ausnehmung in einem Flanschteil oder einer Gehäusekomponente des Elektrohandwerkzeuggeräts vorgesehen werden muss, um das Betätigungsorgan lagefixiert und kippbar zu halten.

Wie eingangs erwähnt, wird das Betätigungsorgan durch mechanische Kopplung mit einem manuell betätigbaren Stellmittel des Geräts gelöst beziehungsweise in Feststellrichtung der Bremseinrichtung bewegt. Bei dem manuell betätigbaren Stellmittel kann es sich beispielsweise um einen Drücker oder Taster oder auch einen Schieber handeln, der unmittelbar manuell mit den Fingern eines Benutzers betätigt wird. In vorteilhafter Weise wirkt das manuell betätigbare Stellmittel unmittelbar oder mittelbar über einen Schubmechanismus auf das flächenhafte Betätigungsorgan ein. Durch Verwendung eines Schubmechanismus lässt sich in vorteilhafter Weise eine wenige Komponenten umfassende mechanische Kopplung realisieren. Da im vorliegenden Fall lediglich eine Verkippung des flächenhaften Betätigungsorgans ausgeführt werden muss, erweist sich ein Schubmechanismus, der vorzugsweise nur eine einzige Komponente umfasst, als besonders vorteilhaft, wirksam und einfach.

Dessen ungeachtet erweist es sich als vorteilhaft, wenn die mechanische Kopplung zwischen dem manuell betätigbaren Stellmittel und dem flächenhaften Betätigungsorgan radial außen an dem Betätigungsorgan angreift, da solchenfalls ein größtmögliches Kippmoment erreicht wird. Hierfür erweist es sich als vorteilhaft, wenn die mechanische Kopplung radial außen an einem radialen Ansatz des Betätigungsorgans angreift, der wiederum vorzugsweise einstückig mit dem Betätigungsorgan ausgebildet ist.

Als besonders vorteilhaft hat sich eine Ausführungsform erwiesen, bei der die schwenkbare Anlenkung des flächenhaften Betätigungsorgans auf einer Ringscheibenhälfte und die mechanische Kopplung auf der anderen Ringscheibenhälfte vorgesehen ist. Dies wäre beispielsweise der Fall, wenn die mechanische Kopplung beispielsweise zwischen der "11 Uhr" und "1 Uhr Position" des Betätigungsorgans angreift und das Betätigungsorgan zwischen der "4 Uhr" und "8 Uhr Position" schwenkbar gelagert ist.

Die erfindungsgemäß konzipierte Bremseinrichtung erweist sich auch insofern als vorteilhaft, als sie zwischen Getriebegehäuseteil und Motorgehäuseteil oder zwischen Motorgehäuseteil und Handgriffteil untergebracht werden kann. Daher erweist es sich nach einem weiteren Erfindungsgedanken als vorteilhaft, dass ein Zwischengehäuseflansch vorgesehen werden kann und die Bremseinrichtung in diesem entsprechend schmal bauenden Zwischengehäuseflansch untergebracht werden kann, welcher dann zwischen dem Getriebegehäuseteil und dem Motorgehäuseteil oder alternativ zwischen dem Motorgehäuseteil und dem Handgriffteil als Modulkomponente vorgesehen werden kann. Auf diese Weise kann die Bremseinrichtung herstellerseitig als optionales Modul realisiert werden, so dass der Hersteller sowohl Elektrohandwerkzeuggeräte ohne die entsprechende Bremseinrichtung oder mit einer solchen Bremseinrichtung unter verhältnismäßig geringem zusätzlichem Aufwand anbieten kann. Bei Ausführungsformen ohne Bremseinrichtung kann dann der Zwischengehäuseflansch mit den Komponenten der Bremseinrichtung weggelassen werden (es ist in der Regel dann nur erforderlich, eine kürzere Antriebswelle vorzusehen), oder es wird alternativ der Zwischenflansch beibehalten jedoch unter Weglassung der Komponenten der Bremseinrichtung.

In vorteilhafter Weise weist der Zwischengehäuseflansch eine axiale Länge von 15 bis 40 mm, insbesondere von 15 bis 30 mm auf.

Weitere Merkmale, Einzelheiten und Vorteile der Erfindung ergeben sich aus den beigefügten Patentansprüchen und aus der zeichnerischen Darstellung und nachfolgenden Beschreibung einer bevorzugten Ausführungsform des erfindungsgemäßen Handwerkzeuggeräts. In der Zeichnung zeigt:

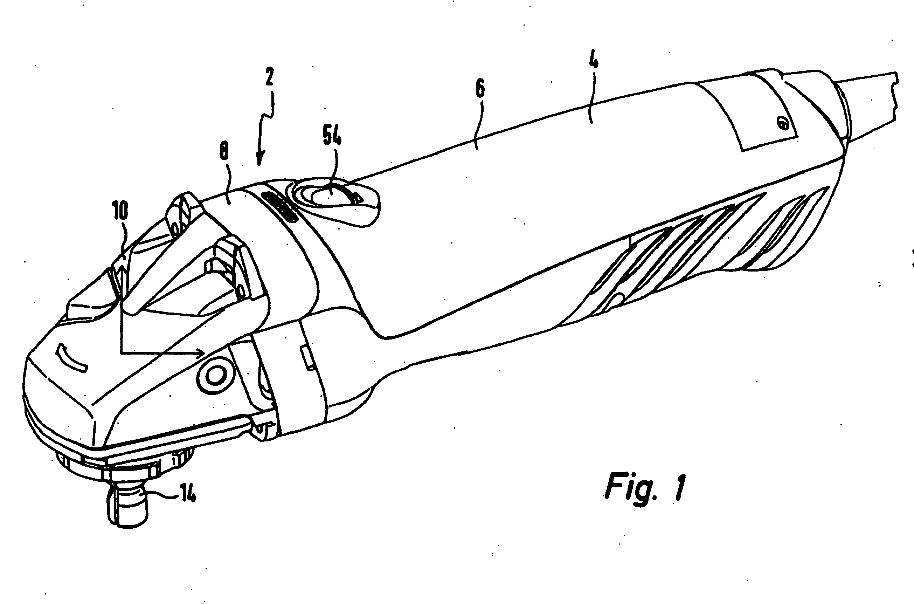

- Figur 1: eine perspektivische Ansicht des erfindungsgemäßen Elektrohandwerkzeuggeräts;
- Figur 2: eine teilweise aufgerissene perspektivische Ansicht des Getriebegehäuseteils und der Bremseinrichtung des Geräts nach Figur 1;
- Figur 3: eine perspektivische Ansicht ohne Getriebegehäuseteil;
- Figur 4: eine Längsschnittansicht des Elektrohandwerkzeuggeräts nach Figur 1;
- Figur 5a: eine perspektivische Ansicht der erfindungsgemäß ausgebildeten Bremsscheibe des Elektrohandwerkzeuggeräts nach Figuren 1-4;
- Figur 5b: eine Draufsicht auf die Bremsscheibe nach Figur 5a und
- Figur 5c: eine Schnittansicht der Bremsscheibe nach Figur 5b.

Die Figuren zeigen ein insgesamt mit dem Bezugszeichen 2 bezeichnetes Elektrohandwerkzeuggerät in Form eines Winkel- oder Trennschleifers. Das Gerät umfasst einen Handgriffteil 4, der zugleich einen Motorgehäuseteil 6 bildet, an den sich ein noch näher zu beschreibender

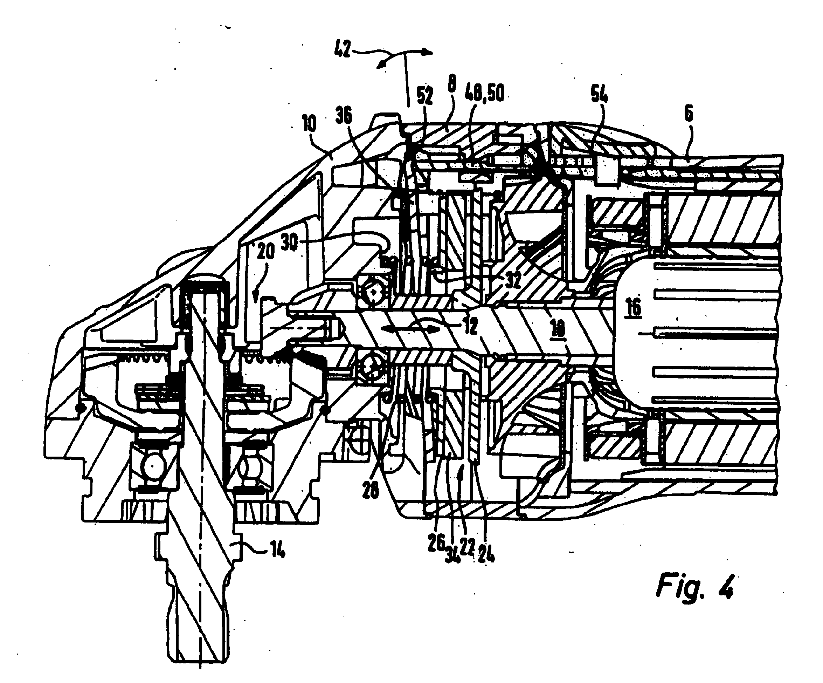

Zwischengehäuseflansch 8 anschließt, sowie einen Getriebegehäuseteil 10, von dem sich senkrecht zu einer Längsmittelachse 12 des Geräts (siehe Figur 4) eine Werkzeugspindel 14 heraus erstreckt. Dort kann ein nicht dargestelltes Schleif- oder Trennschleifwerkzeug in an sich bekannter Weise festgelegt werden.

Von einem Elektromotor 16 erstreckt sich eine Antriebswelle 18 in Richtung 12 der Längsmittelachse durch den Zwischengehäuseflansch 8 hindurch in den Getriebegehäuseteil 10. Die Antriebswelle 18 treibt über ein Winkelgetriebe 20 die Werkzeugspindel 14 an.

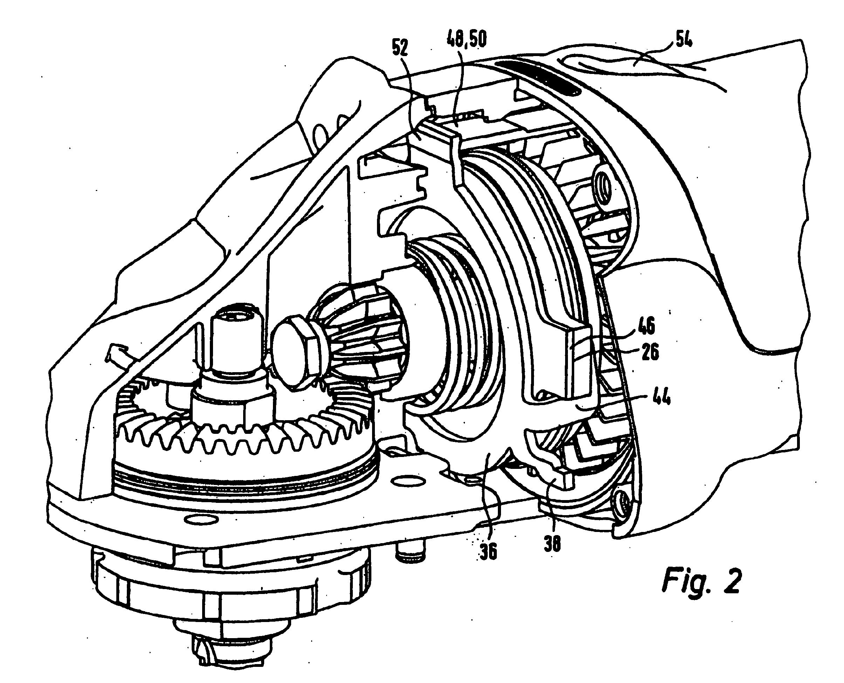

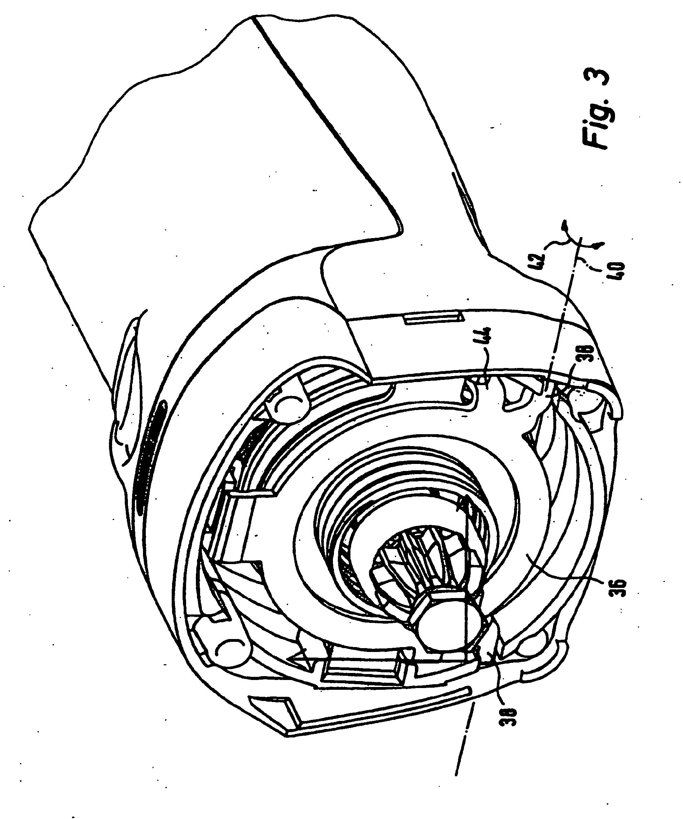

Zwischen dem Motorgehäuseteil 6 und dem Getriebegehäuseteil 10 innerhalb des Zwischengehäuseflanschs 8 ist eine insgesamt mit dem Bezugszeichen 22 vorgesehene Bremseinrichtung für die Antriebswelle 18 und damit die Werkzeugspindel 14 vorgesehen. Die Bremseinrichtung 22 umfasst eine auf der Antriebswelle 18 fest sitzende Bremsscheibe 24 und eine Gegenbremsscheibe 26. Des Weiteren umfasst die Bremseinrichtung 22 eine Feder 28, welche die Gegenbremsscheibe 26 in Längsrichtung 12 in Richtung auf die Bremsscheibe 24 vorspannt. Die Feder 28 stützt sich dabei einenends gegen einen ein Auflager bildenden Ringbund 30 des Getriebegehäuseteils 10 ab und belastet anderenends die Gegenbremsscheibe 26. In diesem Bereich weist die Gegenbremsscheibe 26 einen inneren Kragen 32 auf, welcher eine Durchtrittsöffnung für die Antriebswelle 18 begrenzt. Der Kragen 32 erstreckt sich in Richtung auf den Getriebegehäuseteil 10, so dass die Feder 28 den Kragen 32 radial außen umgeben kann. Die Feder 28 stabilisiert so die schwimmende Lagerung und Anordnung der Gegenbremsscheibe 26 um die Antriebswelle 18 herum. Die Gegenbremsscheibe 26 ist aus einem Blechteil gebildet und trägt auf ihrer der Bremsscheibe 24 zugewandten Seite eine Bremsbelagsbeschichtung 34. Die Gegenbremsscheibe 26 wird durch die Feder 28 somit gegen die mit der Antriebswelle 18 drehfest und fixiert angeordnete Bremsscheibe 24 gedrückt. Da die Gegenbremsscheibe 26 gegenüber dem Zwischengehäuseflansch 8 nicht umdrehbar ist, wird so die Antriebswelle 18 gebremst. Zum Lösen der Bremseinrichtung 22 ist ein flächenhaft erstrecktes Betätigungsorgan 36 vorgesehen. Es ist im beispielhaft und bevorzugt dargestellten Fall ebenfalls ringscheibenförmig ausgebildet und im ausgeschalteten Zustand des Elektrohandwerkzeuggeräts im Wesentlichen in einer Ebene senkrecht zur Längsrichtung 12 der Antriebswelle 18 beziehungsweise parallel zur jeweiligen Erstreckungsebene der Bremsscheibe 24 und Gegenbremsscheibe 26 angeordnet. Dieses flächenhafte Betätigungsorgan 36 ist um einige Grad, insbesondere 2° bis 20°, insbesondere 5° bis 15° zu der genannten Ebene verkippbar in dem Zwischengehäuseflansch 8 vorgesehen. Diese kippbare Anordnung ergibt sich am Besten aus den Figuren 2 und 3. Man erkennt radial vorstehende erste Ansätze 38, die in der Ansicht der Figur 3 etwa auf 4:30 Uhr und 7:30 Uhr Position des ringscheibenförmigen Betätigungsorgans 36 angeordnet sind. Mit diesen radialen Ansätzen 38, die bezüglich der Ebene des Betätigungsorgans auch abgebogen sein können, ist das Betätigungsorgan 36 an gehäusefesten Komponenten, hier des Zwischengehäuseflanschs 8, derart spielbehaftet jedoch insgesamt unverlierbar gehalten, dass es um eine in Figur 3 angedeutete Schwenkachse 40 kippbar ist, was auch durch einen Doppelpfeil 42 in Figuren 3 und 4 angedeutet ist.

Das Betätigungsorgan 36 ist über weitere zweite Ansätze 44 wie am Besten aus Figur 2 ersichtlich ist, mit der Gegenbremsscheibe 26 in axialer Richtung gekoppelt. Diese Ansätze 44 sind im beispielhaft dargestellten Fall einstückig mit dem flächenhaften ringscheibenförmigen Betätigungsorgan 36 ausgebildet. Die Ansätze 44 sind aus der Ebene des Betätigungsorgans weg gebogen; sie sind zweifach umgebogen und hintergreifen einen radialen Ansatz 46 der Gegenbremsscheibe 26. Diese mechanische Kopplung ist auf einander gegenüberliegenden Seiten vorgesehen, und zwar derart, dass die radialen Ansätze 46 der Gegenbremsscheibe etwa mittig, das heißt auf 3:00 Uhr und 9:00 Uhr Position ausgebildet sind. Auf diese Weise wird bei der dargestellten Orientierung der Schwenkachse 40 des Betätigungsorgans 36 eine gleichmäßige lineare Stellkraft in Längsrichtung 12 auf die Gegenbremsscheibe 26 eingeleitet, ohne dass die Bremsscheibe 26 dabei ein wesentliches Kippmoment erfährt.

Zum Verkippen des flächenhaften Betätigungsorgans 36 in die in Figur 4 dargestellte Freigabestellung der Bremseinrichtung 22 wird ein Schubmechanismus 48 verwendet. Dieser Schubmechanismus 48 umfasst ein schubstangenartiges parallel zur Antriebswelle 18 in Längsrichtung 12 verschiebliches Kopplungselement 50, welches auf das flächenhafte Betätigungsorgan 36 einwirkt, und zwar im beispielhaft dargestellten Fall im Bereich der 12:00 Uhr Position, wo es gegen einen dritten radialen Ansatz 52 des Betätigungsorgans 36 anliegt. Das Kopplungselement 50 ist durch einen manuell betätigbaren Schieber 54 an der Oberseite des Motorgehäuseteils 6 gesteuert. Wenn dieser Schieber 54 in seine Ein-Stellung zur Inbetriebnahme des Elektrohandwerkzeuggeräts geschoben wird, so wird über das Kopplungselement 50 des Schubmechanismus 48 das flächenhafte Betätigungsorgan 36 in die in Figur 4 dargestellte Stellung verkippt. Über die zweiten Ansätze 44 des Betätigungsorgans 36 wird die Gegenbremsscheibe 36 entgegen der Federkraft in Längsrichtung 12 und in Richtung auf den Getriebegehäuseteil 10 bewegt, so dass die Gegenbremsscheibe 26 von der mit der Antriebswelle 18 drehfesten Bremsscheibe 24 frei kommt und die Bremseinrichtung 22 hierdurch gelöst wird. Bei Abschalten des Elektrohandwerkzeuggeräts durch Zurückbewegen des Schiebers 54 wird die Gegenbremsscheibe 26 unter der Wirkung der Feder 28 in Richtung auf die rotierende Bremsscheibe 24 zurückgedrückt, wodurch die Antriebswelle 18 rasch stillgesetzt wird.

Man erkennt des Weiteren, dass der Zwischengehäuseflansch 8 als modulartige Gehäusekomponente ausgebildet und zwischen Motorgehäuseteil 6 und Getriebegehäuseteil 10 angeordnet ist. Auch andere Ausführungsformen sind denkbar, wo die Bremseinrichtung 22 auf der anderen Seite des Elektromotors 16 zwischen Motorgehäuseteil und Handgriffteil des Elektrohandwerkzeuggeräts angeordnet ist.

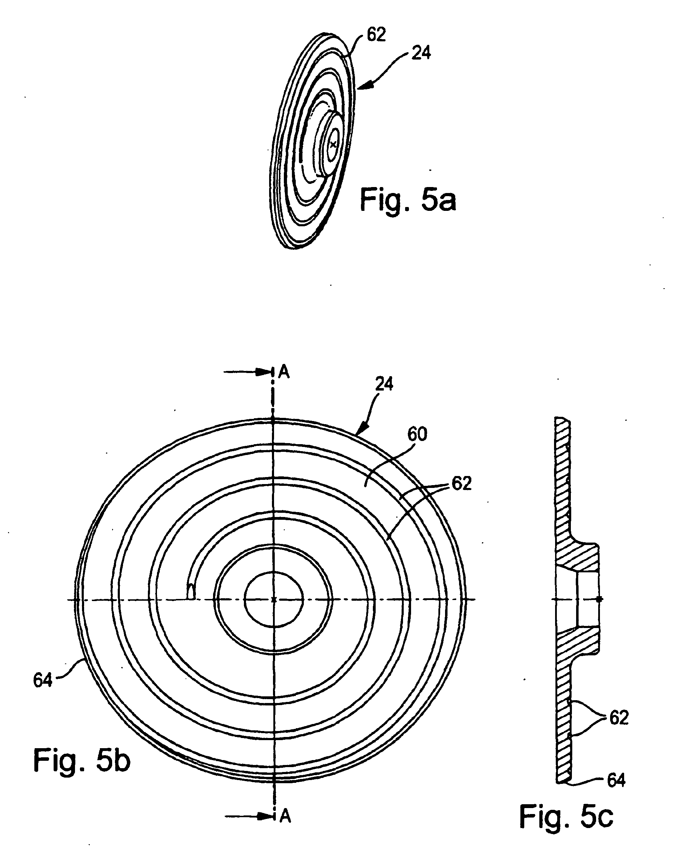

Die Figuren 5a, b und c zeigen verschiedene Ansichten der erfindungsgemäß ausgebildeten Bremsscheibe 24. Die Bremsscheibe 24 weist auf ihrer mit der Gegenbremsscheibe 26 zusammenwirkenden Oberseite 60 spiralförmig nach außen verlaufende nutförmige Vertiefungen 62 auf. Mittels dieser Vertiefungen 62 kann Luft, die infolge der hohen Drehzahlen zwischen Bremsscheibe 24 und Gegenbremsscheibe 26 gebildet wird, bei Ausübung des Bremsdrucks nach außen verdrängt werden. Im beispielhaft dargestellten und bevorzugten Fall ist eine einzige von innen nach außen spiralförmig verlaufende Vertiefung 62 vorgesehen, die ganz außen am Rand 64 der Bremsscheibe 24 mündet. Es ist jedenfalls wesentlich, dass die nutförmigen Vertiefungen sich bis nach außerhalb einer Überdeckung der Bremsscheibe 24 durch die Gegenbremsscheibe 26 erstrecken, so dass die nutförmigen Vertiefungen 62 frei ausmünden, damit die Luft weitgehend widerstandslos verdrängt werden kann.

Die Tiefe der nutförmigen Vertiefung 62 beträgt im bevorzugt dargestellten Fall 0,4 mm, und ihre Breite beträgt 0,8 mm. Die Steigung der Spiralform beträgt 5 mm.

## Patentansprüche

1. Elektrohandwerkzeuggerät (2), insbesondere Winkelschleifer oder Trennschleifer, mit einem Getriebegehäuseteil (10), einem Motorgehäuseteil (6) und einen Handgriffteil (4), wobei zumindest der Getriebegehäuseteil (10) und der Motorgehäuseteil (6) voneinander separate zusammengefügte Komponenten sein können, und mit einer Bremseinrichtung (22) zum Abbremsen der Antriebswelle (18) nach Abschalten des Geräts, wobei die Bremseinrichtung (22) eine erste mit der Antriebswelle (18) drehfeste Bremsscheibe (24) und eine nicht drehende Gegenbremsscheibe (26) umfasst, die in Richtung auf die Bremsscheibe (24) federvorgespannt ist, **dadurch gekennzeichnet, dass** die Bremsscheibe (24) auf ihrer mit der Gegenbremsscheibe (26) zusammenwirkenden Oberseite nutförmige, nach außen verlaufende und außerhalb der Überdeckung durch die Gegenbremsscheibe mündende Vertiefungen (62) aufweist und dass die nutförmigen Vertiefungen (62) bezüglich der Antriebswelle spiralförmig nach außen verlaufen und eine Tiefe von 0,2 - 0,8 mm aufweisen, und dass die Steigung des spiralförmigen Verlaufs der Vertiefungen (62) 3 - 10 mm beträgt und dass die nutförmigen Vertiefungen (62) bis zum Rand (64) der Bremsscheibe (24) verlaufen und dort aus der Überdeckung durch die Gegenbremsscheibe (26) münden.

2. Elektrohandwerkzeuggerät nach Anspruch 1, **dadurch gekennzeichnet, dass** die Steigung des spiralförmigen Verlaufs der Vertiefungen (62) 3 - 8 mm, insbesondere 4 - 6 mn beträgt.

3. Elektrohandwerkzeuggerät nach einem oder mehreren der vorstehenden Ansprüche, **dadurch gekennzeichnet, dass** die nutförmigen Vertiefungen (62) eine Tiefe 0,6 mm und weiter insbesondere von 0,3 - 0,5 mm haben.

4. Elektrohandwerkzeuggerät nach einem oder mehreren der vorstehenden Ansprüche, **dadurch gekennzeichnet, dass** die nutförmigen Vertiefungen (62) eine Breite von 0,5 - 1,5 mm, insbesondere von 0,5 - 1,2 mm und weiter insbesondere von 0,6 - 1,0 mm haben.

5. Elektrohandwerkzeuggerät nach einem oder mehreren der vorstehenden Ansprüche, **dadurch gekennzeichnet, dass** die Gegeibremsscheibe (26) von einem flächenhaften insbesondere schwimmend um die Antriebswelle (18) herum gelagerten und im wesentlichen in einer Ebene parallel zur Ebene der Gegenbremsscheibe (26) erstreckten Betätigungsorgan (36) entgegen der Federvorspannung in Freigaberichtung bewegbar ist und das flächenhafte Betätigungsorgan (36) hierfür bezüglich der genannten Ebene um einige Grad verkippbar ist.

6. Elektrohandwerkzeuggerät nach einem oder mehreren der vorstehenden Ansprüche, **dadurch gekennzeichnet, dass** die Gegenbremsscheibe (26) einen inneren Kragen (32) oder Bund aufweist, welcher koaxial zu der Antriebswelle (18) verläuft und eine Öffnung definiert:, durch die sich die Antriebswelle (18) hindurcherstreckt und dass der innere Kragen (32) oder Bund mit seinem freien Ende zu dem Betätigungeorgan (36) hin erstreckt ist und die Feder (28) den Kragen (32) oder Bund radial außen konzentrisch umgibt.

7. Elektrohandwerkzeuggerät nach einen oder mehreren der vorstehenden Ansprüche, **dadurch gekennzeichnet, dass** die Gegenbremsscheibe (26) eine ringscheibenförmige Blechscheibe mit einer Bremsbelagbeschichtung (34) umfasst.

8. Elektrohandwerkzeuggerät nach einem oder mehreren der vorstehenden Ansprüche, **dadurch gekennzeichnet, dass** das flächenhafte Betätigungsorgan (36) radiale und/oder axiale Ansätze (38, 44, 52) aufweist und wenigstens einer, vorzugsweise zwei der Ansätze (46) aus der Eingscheibenebene herausgebogen sind und die Gegenbrensscheibe (26) in axialer Richtung (12) der Antriebswelle (18) hintergreifen.

9. Elektrohandwerkzeuggerät nach Anspruch 5, 6, 7 oder 8, **dadurch gekennzeichnet, dass** das flächenhafte Betätigungsorgan (36) über wenigstens einen, vorzugsweise über zwei Ansätze (38) gegen eine Gehäusekonpanente des Handwerkzeuggeräts (2) schwenkbar gelagert ist, um die Kippbewegung ausführen zu können.

10. Elektrohandwerkzeuggerät nach einem oder mehreren der Ansprüche 5 - 9, **dadurch gekennzeichnet, dass** die mechanische Kopplung zwischen dem manuell betätigbaren Stellmittel und dem flächenhaften Betätigungsorgan (36) radial außen an dem Betätigungsorgan (36) angreift.

11. Eleltrohandwerkzeuggerat nach einem oder mehreren der Ansprüche 5 - 10, **dadurch gekennzeichnet, dass** die mechanische Kopplung radial außen an einem radialen Ansatz (52) des Betätigungsorgans (36) angreift.

12. Elektrohandwerkzeuggerät nach einem oder mehreren der Ansprüche 5 - 11, **dadurch gekennzeichnet, dass** die schwenkbare Anlenkung des flächenhaften Betätigungsorgans (36) auf einer Ringscheibenhälfte und die mechanische Kopplung auf der anderen Ringschenbenhälfte vorgesehen ist.

13. Elektrohandwerkzeuggerät nach einem oder mehreren der vorstehenden Ansprüche, **dadurch gekennzeichnet, dass** die Bremseinrichtung (22) in einem schmal bauenden Zwischengehäuseflansch (8) untergebracht ist, der zwischen dem Getriebegehäuseteil (10) und dem Motorgehauseteil (6) oder zwischen dem Motorgehauseteil (6) und dem Handgriffteil (4) als Modulkonrponente vorgesehen ist und insbesondere eine axiale Länge von 15 - 40 mm, insbesondere 15 - 30 mm aufweist.

## Claims

1. Electric hand-held tool appliance (2), in particular an angle grinder or abrasive cutter, having a transmission housing part (10), a motor housing part (6) and a handle part (4), wherein at least the transmission housing part (10) and the motor housing part (6) may be mutually separate components that are joined together; and having a braking device (22) for slowing down the driving shaft (18) after the appliance has been switched off, wherein the braking device (22) comprises a first braking disc (24), which is integral in rotation with the driving shaft (18), and a non-rotating counter-braking disc (26), which is spring-pretensioned in the direction of the braking disc (24),
**characterised in that**
the braking disc (24) has, on its upper side that interacts with the counter-braking disc (26), groove-shaped depressions (62) which extend outwards and emerge outside the overlap by the counter-braking disc, and that the groove-shaped depressions (62) extend outwards helically with respect to the driving shaft and have a depth of 0.2 - 0.8 mm, and that the pitch of the helical path of the depressions (62) is 3 - 10 mm, and that the groove-shaped depressions (62) extend as far as the rim (64) of the braking disc (24) and emerge, at that point, from the overlap by the counter-braking disc (26).

2. Electric hand-held tool appliance according to claim 1, **characterised in that** the pitch of the helical path of the depressions (62) is 3 - 8 mm, particularly 4 - 6 mm.

3. Electric hand-held tool appliance according to one or more of the preceding claims, **characterised in that** the groove-shaped depressions (62) have a depth of 0.2 - 0.6 mm and, more particularly, of 0.3 - 0.5 mm.

4. Electric hand-held tool appliance according to one or more of the preceding claims, **characterised in that** the groove-shaped depressions (62) have a width of 0.5 - 1.5 mm, particularly of 0.5 - 1.2 mm and, more particularly, of 0.6 - 1.0 mm.

5. Electric hand-held tool appliance according to one or more of the preceding claims, **characterised in that** the counter-braking disc (26) can be moved in the direction of release, against the spring-pretensioning, by a laminar actuating member (36) which is mounted, particularly in a floating manner, around the driving shaft (18), and is extended substantially within a plane parallel to the plane of the counter-braking disc (26), and said laminar actuating member (36) can be tilted, for this purpose, by a few degrees with respect to the aforesaid plane.

6. Electric hand-held tool appliance according to one or more of the preceding claims, **characterised in that** the counter-braking disc (26) has an inner collar (32) or flange which extends coaxially in relation to the driving shaft (18) and defines an aperture through which said driving shaft (18) extends, and that the inner collar (32) or flange is extended, with its free end, towards the actuating member (36) and the spring (28) concentrically surrounds the collar (32) or flange radially on the outside.

7. Electric hand-held tool appliance according to one or more of the preceding claims, **characterised in that** the counter-braking disc (26) comprises an annular disc-shaped sheet-metal disc with a brake-liner coating (34).

8. Electric hand-held tool appliance according to one or more of the preceding claims, **characterised in that** the laminar actuating member (36) has radial and/or axial extensions (38, 44, 52) and at least one, and preferably two, of the extensions (46) are bent out of the plane of the annular disc and engage behind the counter-braking disc (26) in the axial direction (12) of the driving shaft (18).

9. Electric hand-held tool appliance according to claim 6, 7 or 8, **characterised in that** the laminar actuating member (36) is mounted, via at least one, and preferably via two, extensions (38), so as to be pivotable against a housing component of the hand-held tool appliance (2), in order to be capable of performing the tilting movement.

10. Electric hand-held tool appliance according to one or more of claims 5 - 9, **characterised in that** the mechanical coupling between the manually actuatable control means and the laminar actuating member (36) acts upon said actuating member (36) radially on the outside.

11. Electric hand-held tool appliance according to one or more of claims 5 - 10, **characterised in that** the mechanical coupling acts upon a radial extension (52) of the actuating member (36) radially on the outside.

12. Electric hand-held tool appliance according to one or more of claims 5 - 11, **characterised in that** the pivotable articulation of the laminar actuating member (36) is provided on one half of the annular disc, and the mechanical coupling on the other half of said annular disc.

13. Electric hand-held tool appliance according to one or more of the preceding claims, **characterised in that** the braking device (22) is accommodated in an intermediate housing flange (8) of narrow construction which is provided between the transmission housing part (10) and the motor housing part (6) or between the motor housing part (6) and the handle part (4) in the form of a modular component, and has, in particular, an axial length of 15 - 40 mm, in particular 15 - 30 mm. Claim 2: There is an error in the German here, **in that** the meaning should obviously be "according to claim 1" and not "according to claim 2" - corrected in the translation.

## Revendications

1. Outil manuel électrique (2), en particulier meuleuse d'angle ou tronçonneuse, comprenant une partie carter d'engrenages (10), une partie carter de moteur (6) et une partie poignée (4), dans lequel au moins la partie carter d'engrenages (10) et la partie carter de moteur (6) peuvent être des composants distincts l'un de l'autre et assemblés, et un dispositif de freinage (22) destiné à freiner l'arbre moteur (18) après la mise à l'arrêt de l'outil, le dispositif de freinage (22) comprenant un premier disque de frein (24) solidaire de l'arbre moteur (18) en rotation et un contre-disque de frein (26) non rotatif qui est précontraint élastiquement en direction du disque de frein (24), **caractérisé en ce que** le disque de frein (24) comporte, sur sa surface qui coopère avec le contre-disque de frein (26), des creux (62) en forme de rainure, s'étendant vers l'extérieur et débouchant en dehors de la zone recouverte par le contre-disque de frein, **en ce que** les creux (62) en forme de rainure s'étendent en spirale vers l'extérieur par rapport à l'arbre d'entraînement et présentent une profondeur de 0,2 à 0,8 mm, **en ce que** la pente de la forme en spirale des creux (62) en forme de rainure est de 3 à 10 mm, et **en ce que** les creux (62) en forme de rainure s'étendent jusqu'au bord (64) du disque de frein (24) et débouchent en dehors de la zone recouverte par le contre-disque de frein (26).

2. Outil manuel électrique selon la revendication 1, **caractérisé en ce que** la pente de la courbe en forme de spirale des creux (62) est de 3 à 8 mm, en particulier de 4 à 6 mm.

3. Outil manuel électrique selon l'une ou plusieurs des revendications précédentes, **caractérisé en ce que** les creux (62) en forme de rainure ont une profondeur de 0,2 à 0,6 mm et plus particulièrement de 0,3 à 0,5 mm.

4. Outil manuel électrique selon l'une ou plusieurs des revendications précédentes, **caractérisé en ce que** les creux (62) en forme de rainure ont une largeur de 0,5 à 1,5 mm, en particulier de 0,5 à 1,2 mm et plus particulièrement de 0,6 à 1,0 mm.

5. Outil manuel électrique selon l'une ou plusieurs des revendications précédentes, **caractérisé en ce que** le contre-disque de frein (26) peut être déplacé dans le sens du dégagement à l'encontre de la précontrainte élastique par un organe d'actionnement (36) de forme plate, en particulier monté pour pouvoir flotter autour de l'arbre moteur (18) et s'étendant sensiblement dans un plan parallèle au plan du contre-disque de frein (26), et à cet effet l'organe d'actionnement (36) de forme plate peut basculer de quelques degrés par rapport au plan précité.

6. Outil manuel électrique selon l'une ou plusieurs des revendications précédentes, **caractérisé en ce que** le contre-disque de frein (26) comporte un collet ou cordon intérieur (32) qui s'étend coaxialement à l'arbre moteur (18) et définit une ouverture à travers laquelle passe l'arbre moteur (18), et **en ce que** le collet ou cordon intérieur (32) se prolonge par son extrémité libre jusqu'à l'organe d'actionnement (36) et le ressort (28) entoure le collet ou cordon (32) concentriquement et radialement à l'extérieur.

7. Outil manuel électrique selon l'une ou plusieurs des revendications précédentes, **caractérisé en ce que** le contre-disque de frein (26) comprend un disque de tôle en forme de disque annulaire qui est pourvu d'un revêtement formant garniture de frein (34).

8. Outil manuel électrique selon l'une ou plusieurs des revendications précédentes, **caractérisé en ce que** l'organe d'actionnement de forme plate (36) comporte des saillies radiales et/ou axiales (38, 44, 52) et qu'au moins une, de préférence deux des saillies (46) sont rabattues en dehors du plan du disque et emboîtent le contre-disque de frein (26) par l'arrière dans la direction axiale (12) de l'arbre moteur (18).

9. Outil manuel électrique selon la revendication 5, 6, 7 ou 8, **caractérisé en ce que** l'organe d'actionnement de forme plate (36) est monté oscillant contre un élément de carter de l'outil manuel électrique (2) par l'intermédiaire d'au moins une saillie, de préférence de deux saillies (38) pour pouvoir décrire le mouvement de basculement.

10. Outil manuel électrique selon l'une ou plusieurs des revendications 5 à 9, **caractérisé en ce que** l'accouplement mécanique entre le moyen de réglage pouvant être actionné manuellement et l'organe d'actionnement de forme plate (36) est en prise, radialement à l'extérieur, avec l'organe d'actionnement (36).

11. Outil manuel électrique selon l'une ou plusieurs des revendications 5 à 10, **caractérisé en ce que** l'accouplement mécanique est en prise, radialement à l'extérieur, avec une saillie radiale (52) de l'organe d'actionnement (36).

12. Outil manuel électrique selon l'une ou plusieurs des revendications 5 à11, **caractérisé en ce que** l'articulation oscillante de l'organe d'actionnement de forme plate (36) est agencée sur une moitié du disque annulaire et l'accouplement mécanique est agencé sur l'autre moitié du disque annulaire.

13. Outil manuel électrique selon l'une ou plusieurs des revendications précédentes, **caractérisé en ce que** le dispositif de freinage (22) est logé dans une étroite bride (8) du carter intermédiaire qui est ménagée en tant que composant modulaire entre la partie carter d'engrenages (10) et la partie carter de moteur (6), ou entre la partie carter de moteur (6) et la partie poignée (4), et qui présente en particulier une longueur axiale de 15 à 40 mm, en particulier de 15 à 30 mm.
